(19) Europäisches Patentamt
European Patent Office
Office européen des brevets

(11) **EP 4 513 371 A1**

(12) **EUROPEAN PATENT APPLICATION**
published in accordance with Art. 153(4) EPC

(43) Date of publication:
26.02.2025 Bulletin 2025/09

(21) Application number: 23835115.9

(22) Date of filing: 06.04.2023

(51) International Patent Classification (IPC):
*G06F 30/15* (2020.01)    *B62D 65/00* (2006.01)
*G06F 30/23* (2020.01)

(52) Cooperative Patent Classification (CPC):
B62D 65/00; G06F 30/15; G06F 30/23

(86) International application number:
PCT/JP2023/014204

(87) International publication number:
WO 2024/009574 (11.01.2024 Gazette 2024/02)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 08.07.2022 JP 2022110277

(71) Applicant: JFE Steel Corporation
Tokyo 100-0011 (JP)

(72) Inventor: AGEBA, Ryo
Tokyo 100-0011 (JP)

(74) Representative: Grünecker Patent- und
Rechtsanwälte
PartG mbB
Leopoldstraße 4
80802 München (DE)

(54) **AUTOMOBILE BODY DESIGN METHOD, DEVICE, AND PROGRAM, AND AUTOMOBILE BODY MANUFACTURING METHOD**

(57) An automotive body design method according to the present invention designs an automotive body in which vibration-damping properties of a body-in-white structure 100 is improved by attaching a sheet-like part to a surface of an automotive part configuring the body-in-white structure 100. The automotive body design method includes an automotive part selection step S1 of performing sensitivity analysis of the automotive part with respect to vibration characteristics used for evaluation of the vibration-damping properties of the body-in-white structure 100 and selecting an automotive part to bond and join the sheet-like part, and a sheet-like part optimization analysis step S3 of performing optimization analysis on a shape of the sheet-like part to be bonded and joined to the automotive part selected.

FIG.7

| AUTOMOTIVE PART SELECTION STEP | S1 |
| SENSITIVITY ANALYSIS CONDITION SETTING PROCESS | S1a |
| SENSITIVITY ANALYSIS PROCESS | S1b |
| SHEET-LIKE PART BONDING TARGET AUTOMOTIVE PART SELECTION PROCESS | S1c |

| SHEET-LIKE PART OPTIMIZATION ANALYSIS STEP | S3 |
| DESIGN SPACE SETTING PROCESS | S3a |
| SHEET-LIKE PART MODEL GENERATION PROCESS | S3b |
| CONNECTING PROCESS | S3c |
| MATERIAL PROPERTY SETTING PROCESS | S3d |
| OPTIMIZATION ANALYSIS CONDITION SETTING PROCESS | S3e |
| OPTIMIZATION ANALYSIS PROCESS | S3f |

EP 4 513 371 A1

## Description

Field

The present invention relates to a method, a device, and a program for designing an automotive body having high vibration-damping properties, and a method for manufacturing an automotive body.

Background

In recent years, development of an efficient design method for an automotive body having excellent vibration-damping properties has been required more than ever. One of the major factors is the spread and expansion of a battery powered vehicle. Since the battery powered vehicle does not generate vibration and noise due to an internal combustion engine mounted on a conventional gasoline powered automobile or the like, sensitivity of an occupant to vibration and noise caused by other vibration sources increases. In addition, since the battery powered vehicle needs to be equipped with a large-capacity battery, a body frame structure of the battery powered vehicle, in combination with a battery protection structure, may be significantly different from a body frame structure of the conventional gasoline powered automobile or the like. In the above case, a vibration transfer path in a battery powered vehicle is different from that of the conventional gasoline powered automobile or the like, and conventional empirical rules on a vibration damping structure of an automotive body are not applicable.

Conventionally, as a technique for efficiently designing a high-performance automotive body, for example, Patent Literature 1 discloses optimization analysis, using a computer, for obtaining an optimized shape of an automotive part. The technique is a method for obtaining the optimized shape of the automotive part by setting a design space, a constraint condition, and a loading condition of the automotive part to be optimized and deleting an unnecessary portion in the design space so as to satisfy objectives regarding automotive body performance such as stiffness and weight of the automotive body. In addition, Patent Literature 2 discloses a method for obtaining an optimum sheet thickness of a frame part so as to reduce vibration noise of a panel part of a vehicle.

Citation List

Patent Literature

Patent Literature 1: JP 5585672 B2
Patent Literature 2: JP 6769536 B2

Summary

Technical Problem

According to a method disclosed in Patent Literature 1, it is possible to obtain an optimum three-dimensional shape of an automotive part that achieves objectives such as minimizing strain energy, minimizing generated stress, and maximizing impact absorption energy with respect to a plurality of set input loads.

Therefore, in order to improve vibration-damping properties of the entire body-in-white structure of the automotive body, it is conceivable to apply an optimization analysis technique described in Patent Literature 1 to optimization of a frequency response related to vibration and acoustic field, so as to obtain the optimized shape of the automotive part that improves the vibration-damping properties. However, as a result of trying this technique, the optimized shape of the automotive part becomes a shape scattered three-dimensionally and a useful shape with respect to the actual body-in-white structure cannot be obtained. Therefore, even when the optimum three-dimensional shape is obtained by the optimization analysis technique, a part shape that can be manufactured by press forming or the like cannot be obtained from the optimized shape obtained.

In addition, according to the method disclosed in Patent Literature **2,** it is possible to optimize a sheet thickness distribution of automotive parts configured as an automotive body with respect to vibration noise reduction performance. However, since the method is based on reconfiguration of the sheet thickness distribution of the automotive parts, vibration-damping properties are improved but, for example, stiffness of the automotive body is reduced. There is a case where it is difficult to improve the vibration-damping properties while maintaining other automotive body performance.

The present invention has been made in view of the above problems, and an object of the present invention is to provide a method, a device, and a program for designing an automotive body having improved vibration-damping properties in a body-in-white structure while maintaining automotive body performance, such as stiffness, other than vibration-damping properties. Another object of the present invention is to provide a method for manufacturing an automotive body having improved vibration-damping properties in the body-in-white structure while maintaining automotive body performance, such as stiffness, other than vibration-damping properties.

Solution to Problem

In order to solve the above problems, the inventor has intensively studied a method for designing an automotive body capable of improving vibration-damping properties while maintaining automotive body performance such as stiffness of the automotive body. As a result, the inventor has conceived that an automotive part effective for improving the vibration-damping properties of the entire body-in-white structure is selected, and a sheet-like part is bonded and joined without changing a shape and a sheet thickness of the automotive part selected to adjust the mass distribution of the automotive part. Then, with respect to the sheet-like part to be bonded and joined the automotive part selected, from the viewpoint of vibration-damping properties and weight reduction of the body-in-white structure, the inventor has determined to obtain an optimized shape of the sheet-like part by scraping off a portion that does not affect vibration characteristics by topology optimization. As described above, the inventor has arrived at improving the vibration-damping properties of the entire body-in-white structure while maintaining the automotive body performance such as stiffness by selecting the automotive part effective for improving the vibration-damping properties and obtaining the optimized shape of the sheet-like part to be bonded and joined to the automotive part.

Furthermore, the inventor has intensively studied a method for making the shape of the sheet-like part remaining after optimization analysis such as topology optimization into a shape that is easy to manufacture as an actual sheet-like part. As a result, the inventor sets a two-dimensional space along a surface of the automotive part selected as a design space, generates a sheet-like part model including a shell element, connects the sheet-like part model to the automotive part, and performs topology optimization to obtain the optimized shape of the sheet-like part model. As a result, it has been found that the optimized shape of the sheet-like part model remaining after the topology optimization is a shape that is easy to manufacture as an actual sheet-like part.

The present invention has been made based on these findings, and specifically includes the following configuration.

An automotive body design method according to the present invention designs an automotive body in which vibration-damping properties of a body-in-white structure of the automotive body is improved by bonding and joining a sheet-like part to a surface of an automotive part configuring the body-in-white structure, is executed by a computer and includes: an automotive part selection step of performing sensitivity analysis of the automotive part with respect to vibration characteristics used for evaluation of the vibration-damping properties of the body-in-white structure, and selecting an automotive part to bond and join the sheet-like part; and a sheet-like part optimization analysis step of performing optimization analysis on a shape of the sheet-like part to be bonded and joined to the automotive part selected, wherein the automotive part selection step includes a sensitivity analysis condition setting process of setting, as a sensitivity analysis condition, objectives related to the vibration characteristics of the body-in-white structure, a constraint condition related to a weight of the body-in-white structure and a sheet thickness of the automotive part, and a vibration input condition related to vibration applied to the body-in-white structure, a sensitivity analysis process of performing the sensitivity analysis under the sensitivity analysis condition set and obtaining sensitivity of the automotive part with respect to the vibration characteristics of the body-in-white structure, and a sheet-like part bonding target automotive part selection process of selecting the automotive part to bond and join the sheet-like part based on the sensitivity obtained for the automotive part, and the sheet-like part optimization analysis step includes a design space setting process of setting a two-dimensional space along a surface of the automotive part selected in the automotive part selection step as a design space to be subjected to the optimization analysis, a sheet-like part model generation process of generating, in the design space set, a sheet-like part model that is modeled by a shell element to perform an optimization analysis process, a connecting process of connecting the sheet-like part model generated and the automotive part selected in the automotive part selection step, an optimization analysis condition setting process of setting, as an optimization analysis condition for performing the optimization analysis, the objectives and the vibration input condition set as the sensitivity analysis condition and the constraint condition regarding the weight of the body-in-white structure, and an optimization analysis process of performing the optimization analysis to obtain an optimized shape of the sheet-like part model under the optimization analysis condition set.

The sensitivity analysis condition setting process may include setting of: the objectives that minimize a frequency response value of any one of acceleration, inertance, and equivalent emission power in a predetermined frequency band; the constraint condition that the sheet thickness of the automotive part is equal to or larger than an original sheet thickness of the automotive part; and the vibration input condition for inputting predetermined vibration to one portion or two or more portions of the body-in-white structure.

An automotive body design device according to the present invention designs an automotive body in which vibration-damping properties of a body-in-white structure of the automotive body is improved by bonding and joining a sheet-like part to a surface of an automotive part configuring the body-in-white structure, and includes: an automotive part selection unit configured to perform sensitivity analysis of the automotive part with respect to vibration characteristics used for evaluation of the vibration-damping properties of the body-in-white structure, and select an automotive part to bond and join the sheet-like part; and a sheet-like part optimization analysis unit configured to perform optimization analysis on a shape of the sheet-like part to be bonded and joined to the automotive part selected, wherein the automotive part selection unit includes a sensitivity analysis condition setting unit configured to set, as a sensitivity analysis condition, objectives related to the vibration characteristics of the body-in-white structure, a constraint condition related to a weight of the body-in-white structure and a sheet thickness of the automotive part, and a vibration input condition related to vibration applied to the body-in-white structure, a sensitivity analysis unit configured to perform the sensitivity analysis under the sensitivity analysis condition set and obtain sensitivity of the automotive part with respect to the vibration characteristics of the body-in-white structure, and a sheet-like part bonding target automotive part selection unit configured to select the automotive part to bond and join the sheet-like part based on the sensitivity obtained for the automotive part, and the sheet-like part optimization analysis unit includes a design space setting unit configured to set a two-dimensional space along a surface of the automotive part selected by the automotive part selection unit as a design space to be subjected to the optimization analysis, a sheet-like part model generation unit configured to generate, in the design space set, a sheet-like part model that is modeled by a shell element to perform an optimization analysis process, a connecting unit configured to connect the sheet-like part model generated and the automotive part selected by the automotive part selection unit, an optimization analysis condition setting unit configured to set, as an optimization analysis condition for performing the optimization analysis, the objectives and the vibration input condition set as the sensitivity analysis condition and the constraint condition regarding the weight of the body-in-white structure, and an optimization analysis unit configured to perform the optimization analysis to obtain an optimized shape of the sheet-like part model under the optimization analysis condition set.

An automotive body design program according to the present invention designs an automotive body in which vibration-damping properties of a body-in-white structure of the automotive body is improved by bonding and joining a sheet-like part to a surface of an automotive part configuring the body-in-white structure, and causes a computer to function as: an automotive part selection unit configured to perform sensitivity analysis of the automotive part with respect to vibration characteristics used for evaluation of the vibration-damping properties of the body-in-white structure, and select an automotive part to bond and join the sheet-like part; and a sheet-like part optimization analysis unit configured to perform optimization analysis on a shape of the sheet-like part to be bonded and joined to the automotive part selected, wherein the automotive body design program causes the automotive part selection unit to function as a sensitivity analysis condition setting unit configured to set, as a sensitivity analysis condition, objectives related to the vibration characteristics of the body-in-white structure, a constraint condition related to a weight of the body-in-white structure and a sheet thickness of the automotive part, and a vibration input condition related to vibration applied to the body-in-white structure, a sensitivity analysis unit configured to perform the sensitivity analysis under the sensitivity analysis condition set and obtain sensitivity of the automotive part with respect to the vibration characteristics of the body-in-white structure, and a sheet-like part bonding target automotive part selection unit configured to select the automotive part to bond and join the sheet-like part based on the sensitivity obtained for the automotive part, and the automotive body design program causes the sheet-like part optimization analysis unit to function as a design space setting unit configured to set a two-dimensional space along a surface of the automotive part selected by the automotive part selection unit as a design space to be subjected to the optimization analysis, a sheet-like part model generation unit configured to generate, in the design space set, a sheet-like part model that is modeled by a shell element to perform an optimization analysis process, a connecting unit configured to connect the sheet-like part model generated and the automotive part selected by the automotive part selection unit, an optimization analysis condition setting unit configured to set, as an optimization analysis condition for performing the optimization analysis, the objectives and the vibration input condition set as the sensitivity analysis condition and the constraint condition regarding the weight of the body-in-white structure, and an optimization analysis unit configured to perform the optimization analysis to obtain an optimized shape of the sheet-like part model under the optimization analysis condition set.

An automotive body manufacturing method according to the present invention manufactures an automotive body in which vibration-damping properties of a body-in-white structure of the automotive body is improved by bonding and joining a sheet-like part to a surface of an automotive part configuring the body-in-white structure, and includes: obtaining an optimized shape of a sheet-like part model to be bonded and joined to the automotive part selected in the body-in-white structure by using the automotive body design method according to the present invention; determining, based on the optimized shape of the sheet-like part model obtained, a shape of the sheet-like part to be bonded and joined to the automotive part selected and a bonding and joining position; manufacturing the sheet-like part based on the shape of the sheet-like part determined; and bonding and joining the sheet-like part manufactured to the automotive part selected in the body-in-white structure using the position of the sheet-like part determined. Advantageous Effects of Invention

According to the present invention, by appropriately selecting an automotive part to which a sheet-like part will be bonded and joined and obtaining an optimized shape of a sheet-like part model by optimization analysis, it is possible to design an automotive body in which vibration-damping properties of the body-in-white structure is improved. In addition, according to the present invention, by setting the two-dimensional space along the surface of the automotive part selected as the design space and performing optimization analysis to obtain the optimized shape of the sheet-like part model, a shape that can be easily manufactured by press forming or the like as an actual sheet-like part can be obtained. Furthermore, according to the present invention, it is possible to manufacture an automotive body in which the vibration-damping properties of the body-in-white structure is improved while maintaining the automotive body performance, such as stiffness, other than the vibration-damping properties.

Brief Description of Drawings

FIG. 1 is a block diagram illustrating a configuration of an automotive body design device according to a first embodiment.

FIG. 2 is a diagram illustrating a body-in-white structure of the automotive body to be analyzed in the first embodiment.

FIG. 3 is a diagram illustrating a specific example of a portion for obtaining vibration characteristics used for evaluation of vibration-damping properties of the body-in-white structure in the first embodiment ((a) Roof panel and (b) Roof center reinforcement and floor cross member).

FIG. 4 illustrates frequency responsiveness of an inertance of the roof center reinforcement obtained as an example of the vibration characteristics used for evaluation of the vibration-damping properties of the body-in-white structure in the first embodiment.

FIG. 5 is a diagram illustrating a sheet thickness change rate for each automotive part obtained by sensitivity analysis and an automotive part selected as a target to bond and join a sheet-like part based on the sheet thickness change rate in the first embodiment, Example 2, and Example 6 ((a) Sensitivity analysis result and (b) Automotive part selected).

FIG. 6 is a diagram illustrating a result of obtaining an optimized shape of a sheet-like part model to be bonded and joined to the automotive part selected based on a result of sensitivity analysis in the first embodiment, a second embodiment, Example 2, and Example 6.

FIG. 7 is a flowchart illustrating a process flow of an automotive body design method according to the first embodiment.

FIG. 8 is a diagram illustrating a sheet thickness change rate for each automotive part obtained by the sensitivity analysis and the automotive part selected as a target to bond and join the sheet-like part based on the sheet thickness change rate in Example 1 ((a) Sensitivity analysis result, (b) Automotive part selected).

FIG. 9 is a diagram illustrating a result of obtaining the optimized shape of the sheet-like part model to be bonded and joined to the automotive part selected based on the result of sensitivity analysis in Example 1.

FIG. 10 is a diagram illustrating the sheet thickness change rate for each automotive part obtained by the sensitivity analysis and the automotive part selected as a target to bond and join the sheet-like part based on the sheet thickness change rate in Example 3 ((a) Sensitivity analysis result and (b) Automotive part selected).

FIG. 11 is a diagram illustrating a result of obtaining the optimized shape of the sheet-like part model to be bonded and joined to the automotive part selected based on a result of the sensitivity analysis in Example 3.

FIG. 12 is a diagram illustrating the sheet thickness change rate for each automotive part obtained by the sensitivity analysis and the automotive part selected as a target to bond and join the sheet-like part based on the sheet thickness change rate in Example 4 ((a) Sensitivity analysis result and (b) Automotive part selected).

FIG. 13 is a diagram illustrating a result of obtaining the optimized shape of the sheet-like part model to be bonded and joined to the automotive part selected based on a result of the sensitivity analysis in Example 4.

FIG. 14 is a diagram illustrating the sheet thickness change rate for each element of the automotive part obtained by the sensitivity analysis and the automotive part selected as a target to bond and join the sheet-like part based on the sheet thickness change rate in Example 5 ((a) Sensitivity analysis result and (b) Automotive part selected).

FIG. 15 is a diagram illustrating a result of obtaining the optimized shape of the sheet-like part model to be bonded and joined to the automotive part selected based on a result of the sensitivity analysis in Example 5.

FIG. 16 is a diagram illustrating a result of obtaining the optimized shape of the sheet-like part model to be bonded and joined to the automotive part selected based on a result of the sensitivity analysis in Example 6. Description of Embodiments

Prior to describing a first embodiment and a second embodiment of the present invention, a body-in-white structure of an automotive body as a target of the present invention will be described. In the drawings of the present application, an X direction, a Y direction, and a Z direction respectively indicate a front-rear direction of an automotive body, a width direction of the automotive body, and a top-bottom direction of the automotive body.

<Body-in-white structure>

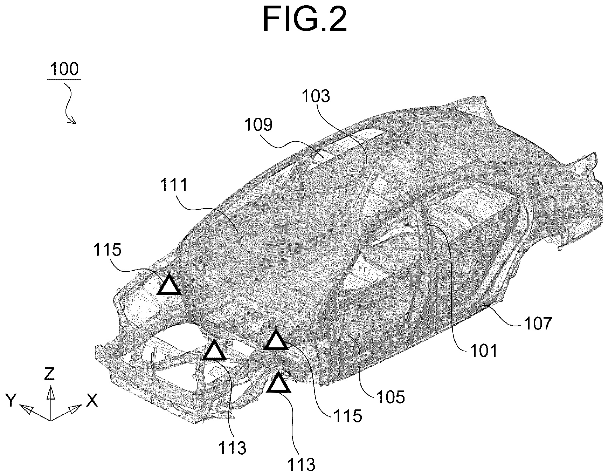

As illustrated in FIG. 2 as an example, a body-in-white structure 100 of the automotive body is configured by automotive parts such as body frame parts and panel parts. Examples of the body frame parts are a center pillar 101, a roof center reinforcement 103, a floor cross member 105, and a rear side sill 107. Examples of the panel parts are a roof panel 109 and a door panel 111.

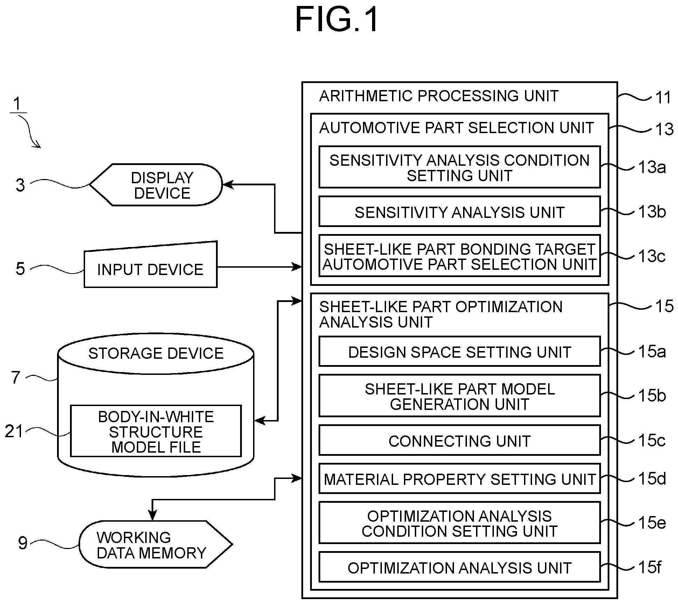

As will be described later, the present invention performs sensitivity analysis of an automotive part with respect to vibration characteristics of the body-in-white structure 100, and optimization analysis for obtaining an optimized shape of a sheet-like part model to be bonded and joined to the automotive part. Therefore, it is assumed that the automotive part configuring the body-in-white structure 100 is modeled by a shell element and/or a solid element. Then, element information, a material property, and the like of the automotive part configuring the body-in-white structure 100 are stored in a body-in-white structure model file 21 (FIG. 1) to be described later.

[First embodiment]

<Automotive body design device>

An automotive body design device according to a first embodiment of the present invention designs an automotive body in which vibration-damping properties of the body-in-white structure 100 of the automotive body is improved by bonding and joining a sheet-like part to a surface of the automotive part configuring the body-in-white structure 100. As illustrated in FIG. 1 as an example, an automotive body design device 1 is configured with a personal computer (PC) or the like, and includes a display device 3, an input device 5, a storage device 7, a working data memory 9, and an arithmetic processing unit 11. The display device 3, the input device 5, the storage device 7, and the working data memory 9 are connected to the arithmetic processing unit 11, and each function is executed by a command from the arithmetic processing unit 11. Hereinafter, each component of the automotive body design device 1 will be described.

The display device 3 is used for displaying an analysis result and the like, and includes a liquid crystal monitor (LCD monitor). The input device 5 is used for inputting a display instruction of the body-in-white structure model file 21 and a condition by an operator, and the like, and includes a keyboard and a mouse. The storage device 7 is used for storing various files such as the body-in-white structure model file 21, and is configured by a hard disk or the like. The working data memory 9 is used for temporary storage and calculation of data used by the arithmetic processing unit 11, and includes a random access memory (RAM).

As illustrated in FIG. 1, the arithmetic processing unit 11 includes an automotive part selection unit 13 and a sheet-like part optimization analysis unit 15, and is configured with a central processing unit (CPU) such as a PC. Each of the above units functions when the CPU executes a predetermined program. A function of each of the above units in the arithmetic processing unit 11 will be described below.

<<Automotive part selection unit>>

The automotive part selection unit 13 performs sensitivity analysis of each automotive part with respect to the vibration characteristics used for evaluating the vibration-damping properties of the body-in-white structure 100, and selects an automotive part to which the sheet-like part will be bonded and joined. As illustrated in FIG. 1, the automotive part selection unit 13 includes a sensitivity analysis condition setting unit 13a, a sensitivity analysis unit 13b, and a sheet-like part bonding target automotive part selection unit 13c.

(Sensitivity analysis condition setting unit)

The sensitivity analysis condition setting unit 13a sets a sensitivity analysis condition in the sensitivity analysis of the automotive part with respect to the vibration characteristics used for evaluating the vibration-damping properties of the body-in-white structure 100. Then, the sensitivity analysis condition setting unit 13a sets, as the sensitivity analysis condition, objectives related to the vibration characteristics of the body-in-white structure 100 and a constraint condition related to a weight of the body-in-white structure 100 and a sheet thickness of each automotive part. Furthermore, the sensitivity analysis condition setting unit 13a sets a vibration input condition regarding vibration to be applied to the body-in-white structure 100 as the sensitivity analysis condition.

The objectives are set according to the vibration characteristics used for evaluating the vibration-damping properties of the body-in-white structure 100. The vibration characteristics include frequency response values such as acceleration in a predetermined frequency band in a predetermined portion of the body-in-white structure 100, inertance, or equivalent emission power.

The inertance is a ratio of a force input to an object and acceleration generated by the force, and is also called a vibrational transfer function. An inertance I can be calculated by the following Formula (1).

$$\text{Inertance} \quad I = \frac{a}{F} \quad [\mathrm{m/s^2/N}]$$

An acceleration amplitude in an evaluating portion of the vibration characteristics is a, and a load amplitude of vibration input to the body-in-white structure is F.

The equivalent emission power is an index that simply expresses a level of sound generated by a structure, and is based on an idea that a perpendicular to the surface component of a vibration speed of the structure gives energy to an acoustic space. An equivalent emission power ERP can be calculated by the following Formula (2), and represents an energy in acoustic emission per unit time.

$$\text{Equivalent emission power} \quad ERP = lf \cdot \frac{1}{2} c\rho \int v^2 ds \quad [\mathrm{J/s}]$$

A loss coefficient is lf, an acoustic velocity is c, a medium density is p, a velocity component perpendicular to the surface is v, and an area of a target surface is $\int ds$.

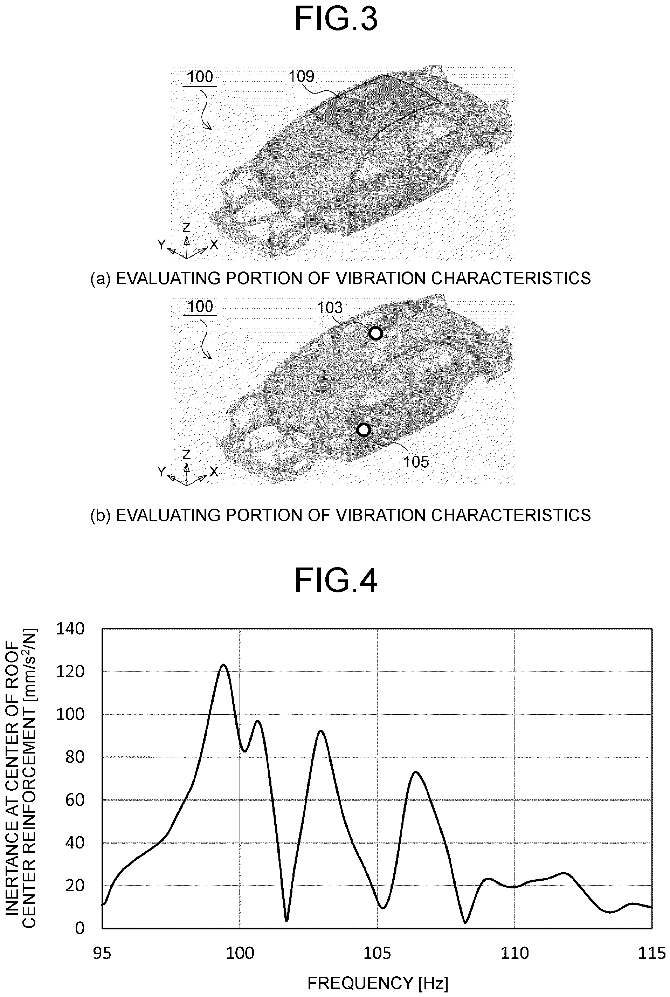

FIG. 3 illustrates an example of a portion for evaluating the vibration characteristics. FIG. 3(a) is a diagram illustrating the roof panel 109 for evaluating the equivalent emission power as the vibration characteristics. FIG. 3(b) is a diagram illustrating the roof center reinforcement 103 and the floor cross member 105 for evaluating the inertance as the vibration characteristics.

FIG. 4 illustrates a frequency response of the inertance in the vertical direction at the center of the roof center reinforcement 103 as an example of the vibration characteristics.

In the first embodiment, minimization of the inertance in the vertical direction in a frequency band of 95 Hz to 115 Hz at the center of the roof center reinforcement 103 in the body-in-white structure 100 is set as objectives.

A portion of the body-in-white structure 100 for evaluating the vibration characteristics is appropriately set according to an instruction by the operator.

The constraint condition is a constraint imposed on performing the sensitivity analysis of the automotive part with respect to the vibration characteristics of the body-in-white structure 100. In the first embodiment, the sensitivity analysis condition setting unit 13a sets a total weight of the body-in-white structure 100 to be predetermined weight or less as the constraint condition regarding the weight of the body-in-white structure 100, and sets the sheet thickness to the original sheet thickness or more of each automotive part as the constraint condition regarding the sheet thickness of each automotive part.

The vibration input condition is a condition related to vibration applied to the body-in-white structure 100 in the sensitivity analysis of each automotive part with respect to the vibration characteristics of the body-in-white structure 100. As conditions related to vibration, an amplitude (magnitude of vibration), a frequency, and a portion to which vibration is applied are set. Examples of the portion to which vibration is applied include a front sub-frame 113 and a suspension tower 115 indicated by triangle marks in FIG. 2.

The sensitivity analysis condition setting unit 13a sets a vibration input condition for applying predetermined vibration to one or two or more portions of the body-in-white structure 100. As a mode of applying the predetermined vibration to one portion, for example, the vibration input condition for applying the predetermined vibration to any one of the front sub-frame 113 and the suspension tower 115 is set. As a mode of applying the predetermined vibration to two portions, for example, the vibration input condition for applying the predetermined vibration to both the front sub-frame 113 and the suspension tower 115, or other portions to which vibration is applied in addition to these portions is set.

When vibration is applied to a plurality of portions, vibration having the same amplitude and frequency may be applied to these portions, or vibration having at least different amplitude or frequency may be applied to these portions.

(Sensitivity analysis unit)

The sensitivity analysis unit 13b performs sensitivity analysis under the sensitivity analysis condition set by the sensitivity analysis condition setting unit 13a, and obtains the sensitivity of each automotive part with respect to the vibration characteristics of the body-in-white structure 100.

In the first embodiment, the sensitivity analysis unit 13b performs sheet thickness optimization of each automotive part as the sensitivity analysis. Then, the sensitivity analysis unit 13b calculates, as the sensitivity of each automotive part, the sheet thickness change rate (= $(t - t_0) \times 100/t_0$ [%]) that is a change rate of an optimum sheet thickness t based on the original sheet thickness $t_0$.

However, as the sensitivity, the sensitivity analysis unit 13b may calculate, for example, a difference between the optimum sheet thickness t and the original sheet thickness $t_0$ (= t - $t_0$) or a ratio between the optimum sheet thickness t and the original sheet thickness $t_0$ (= t/$t_0$).

In addition, the sensitivity analysis unit 13b may be either the sheet thickness optimization analysis for obtaining an optimum sheet thickness of the entire automotive part or the sheet thickness optimization analysis for obtaining an optimum sheet thickness for each shell element used for modeling the automotive part.

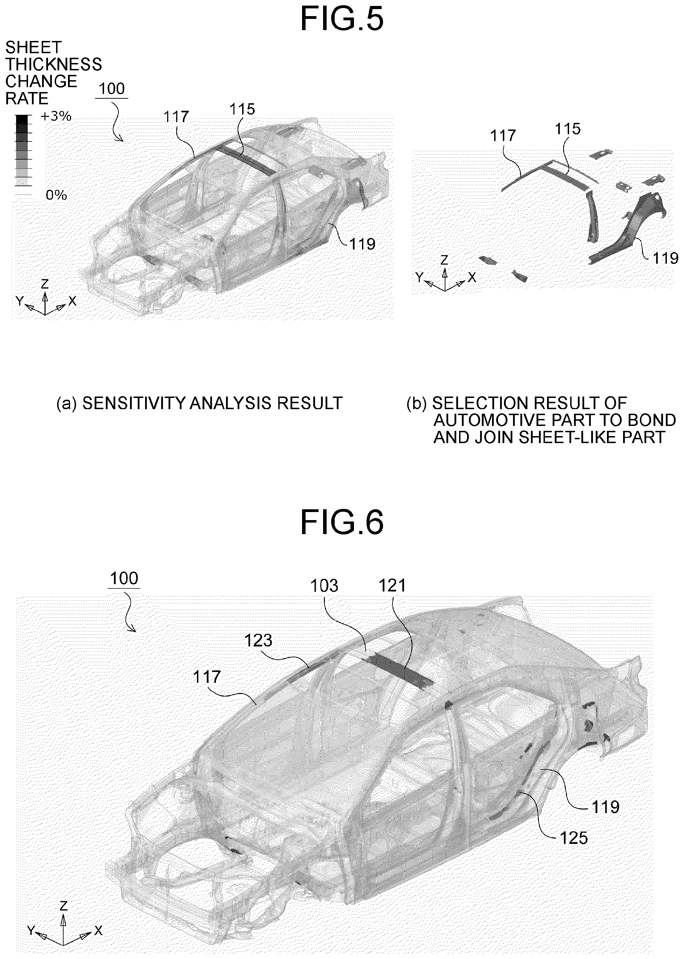

FIG. 5(a) illustrates an example of a result of performing the sensitivity analysis for obtaining the sensitivity of each automotive part of the body-in-white structure 100 illustrated in FIG. 2. The result illustrated in FIG. 5(a) is obtained by giving, as the sensitivity analysis conditions, objectives for minimizing the inertance at the center of the roof center reinforcement 103, and a constraint condition for increasing the weight of the body-in-white structure 100 within 5 kg and setting the sheet thickness of the automotive part to be the original sheet thickness or more. Furthermore, as the sensitivity analysis condition, the vibration input condition for applying predetermined vibration to the front sub-frame 113 is given.

As illustrated in FIG. 5(a), since the sheet thickness change rate of the automotive part such as the roof center reinforcement 103, a roof rail 117, and a wheel house 119 is large, it can be seen that the sensitivity of these automotive parts to the vibration characteristics of the body-in-white structure 100 is high.

(Sheet-like part bonding target automotive part selection unit)

The sheet-like part bonding target automotive part selection unit 13c selects an automotive part to bond and join the sheet-like part based on the sensitivity obtained for each automotive part by the sensitivity analysis unit 13b.

When the sheet thickness optimization analysis for obtaining the sensitivity of each automotive part is performed by the sensitivity analysis unit 13b, the sheet-like part bonding target automotive part selection unit 13c selects an automotive part whose sensitivity is larger than a preset predetermined value. On the other hand, when the sheet thickness optimization analysis for obtaining the sensitivity of each shell element of the automotive part is performed by the sensitivity analysis unit 13b, a ratio of shell elements having the sensitivity equal to or higher than the predetermined value among the shell elements included in each automotive part is calculated first. Then, an automotive part having a large calculated ratio of shell elements may be selected.

FIG. 5(b) illustrates that the roof center reinforcement 103, the roof rail 117, the wheel house 119, and the like have the sheet thickness change rate for each automotive part as large as 5% or more, and are selected as targets to bond and join the sheet-like part.

<<Sheet-like part optimization analysis unit>>

The sheet-like part optimization analysis unit 15 performs the optimization analysis on the shape of the sheet-like part to be bonded and joined to the automotive part selected by the automotive part selection unit 13. As illustrated in FIG. 1, the sheet-like part optimization analysis unit 15 includes a design space setting unit 15a, a sheet-like part model generation unit 15b, a connecting unit 15c, a material property setting unit 15d, an optimization analysis condition setting unit 15e, and an optimization analysis unit 15f.

(Design space setting unit)

The design space setting unit 15a sets a two-dimensional space along the surface of the automotive part selected by the automotive part selection unit 13 as a design space to be subjected to the optimization analysis.

(Sheet-like part model generation unit)

The sheet-like part model generation unit 15b generates a sheet-like part model that is modeled by the shell element to perform an optimization analysis process in the design space set by the design space setting unit 15a.

(Connecting unit)

The connecting unit 15c connects the sheet-like part model generated by the sheet-like part model generation unit 15b to the automotive part selected by the automotive part selection unit 13.

Connection of the sheet-like part model and the automotive part is connection (rigid joint or elastic joint) of, for example, a node of the sheet-like part model and a node of the automotive part (rigid body element) with an element (rigid body element), an elastic body element, or an elastic-plastic body element.

(Material property setting unit)

The material property setting unit 15d sets the material property in the sheet-like part model. The material property to be set may be set according to a type of material (steel sheet or the like) of the sheet-like part to be bonded and joined to the actual automotive part. Further, the sheet thickness set in the sheet-like part model may be a sheet thickness of a material to be actually applied. A value of the sheet thickness is not particularly limited, but is preferably in a range that can be regarded as a sheet material (about 0.5 mm to 10 mm). The setting of the material property of the sheet-like part model by the connecting unit 15c may be either before or after the sheet-like part model is connected to the automotive part by the connecting unit 15c.

(Optimization analysis condition setting unit)

The optimization analysis condition setting unit 15e sets, as the optimization analysis condition, the objectives and the vibration input condition set as the sensitivity analysis condition by the sensitivity analysis condition setting unit 13a and the constraint condition regarding the weight of the body-in-white structure 100.

The optimization analysis condition setting unit 15e can set the objectives that minimizes a frequency response value of any one of acceleration, inertance, and equivalent emission power in a predetermined frequency band in a predetermined portion of the body-in-white structure 100. Furthermore, the optimization analysis condition setting unit 15e can set the vibration input condition for inputting predetermined vibration to one or two or more portions of the body-in-white structure 100.

In the first embodiment, the optimization analysis condition setting unit 15e sets the objectives that minimize the inertance at the center of the roof center reinforcement 103 in the predetermined frequency band and the constraint condition regarding the weight of the body-in-white structure 100. Furthermore, in the first embodiment, the optimization analysis condition setting unit 15e sets the vibration input condition for inputting predetermined vibration to the front sub-frame 113 with respect to the body-in-white structure 100.

(Optimization analysis unit)

The optimization analysis unit 15f performs optimization analysis for obtaining an optimized shape of the sheet-like part model under the optimization analysis condition set by the optimization analysis condition setting unit 15e.

For example, topology optimization of the shell element may be applied to the optimization analysis by the optimization analysis unit 15f. In the topology optimization using densimetry, optimization analysis processing is performed with a density of the shell element of the sheet-like part model as a design variable. Then, the optimized shape of the sheet-like part model is obtained by leaving and erasing the shell element. Furthermore, an optimum position of the sheet-like part model can be obtained from a position of the shell element remaining in the optimization analysis processing.

In a case where an intermediate density is large in topology optimization using the densimetry, it is preferable to discretize by giving a penalty coefficient as an optimization parameter. In this case, a penalty coefficient value can be appropriately set.

The optimization analysis unit 15f is not limited to one that performs topology optimization as described above, and may be the optimization analysis by another calculation method. Furthermore, the optimization analysis unit 15f may also use, for example, analysis software using a commercially available finite element method.

FIG. 6 illustrates an example of the optimized shape of the sheet-like part model obtained by performing the optimization analysis by the optimization analysis unit 15f. As illustrated in FIG. 6, the optimized shape 121 of the sheet-like part model to be bonded and joined to the roof center reinforcement 103, the optimized shape 123 of the sheet-like part model to be bonded and joined to the roof rail 117, and the optimized shape 125 of the sheet-like part model to be bonded and joined to the wheel house 119 are obtained.

<Automotive body design method>

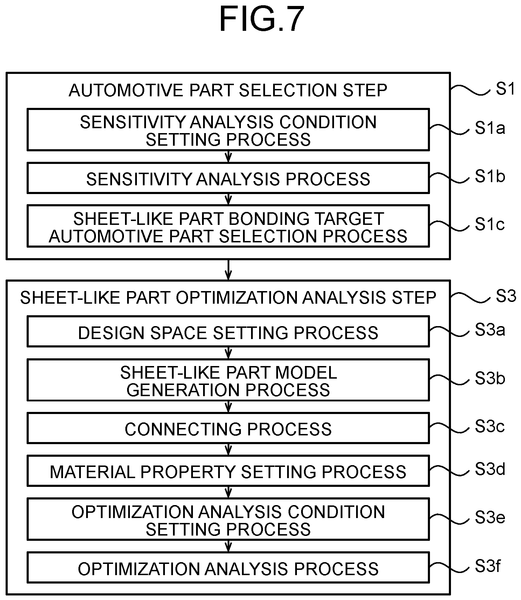

An automotive body design method according to the first embodiment is for designing the automotive body in which the vibration-damping properties of the body-in-white structure 100 is improved by bonding and joining the sheet-like part to the surface of the automotive part configuring the body-in-white structure 100 of the automotive body. The automotive body design method according to the first embodiment causes a computer to execute each step illustrated in FIG. 7, and includes an automotive part selection step S1 and a sheet-like part optimization analysis step S3.

<<Automotive part selection step>>

The automotive part selection step S1 is a step of performing the sensitivity analysis of the automotive part with respect to the vibration characteristics used for evaluating the vibration-damping properties of the body-in-white structure 100 and selecting the automotive part to bond and join the sheet-like part. As illustrated in FIG. 7, the automotive part selection step S1 includes a sensitivity analysis condition setting process S1a, a sensitivity analysis process S1b, and a sheet-like part bonding target automotive part selection process S1c. In the first embodiment, the automotive part selection step S1 is executed by the automotive part selection unit 13 of the automotive body design device 1.

(Sensitivity analysis condition setting process)

The sensitivity analysis condition setting process S1a is a process of setting the sensitivity analysis condition in the sensitivity analysis of the automotive part with respect to the vibration characteristics used for evaluating the vibration-damping properties of the body-in-white structure 100. As the sensitivity analysis condition, the objectives regarding the vibration characteristics of the body-in-white structure 100, the constraint condition regarding the weight of the body-in-white structure 100 and the sheet thickness of each automotive part, and the vibration input condition regarding vibration applied to the body-in-white structure 100 are set.
In the first embodiment, the sensitivity analysis condition setting process S1a is executed by the sensitivity analysis condition setting unit 13a of the automotive body design device 1.
In the sensitivity analysis condition setting process S1a, it is possible to set the objectives that minimize the frequency response value of any one of acceleration, inertance, and equivalent emission power in the predetermined frequency band in the predetermined portion of the body-in-white structure 100. The inertance can be calculated by Formula (1) described above, and the equivalent emission power can be calculated by Formula (2) described above.
In the sensitivity analysis condition setting process S1a, the total weight of the body-in-white structure 100 can be set to the predetermined weight or less as the constraint condition regarding the weight of the body-in-white structure 100, and the original sheet thickness or more of each automotive part can be set as the constraint condition regarding the sheet thickness of each automotive part.
Furthermore, in the sensitivity analysis condition setting process S1a, the vibration input condition for inputting the predetermined vibration to one or two or more portions of the body-in-white structure 100 can be set.
As a mode of applying the predetermined vibration to one portion, for example, as indicated by the triangle marks in FIG. 2, the vibration input condition for applying the predetermined vibration to any one of the front sub-frame 113 and the suspension tower 115 is set. As a mode of applying the predetermined vibration to two portions, for example in FIG. 2, both the front sub-frame 113 and the suspension tower 115, or other portions in addition to these portions are set as portions to which vibration is applied, and the vibration input condition to apply the predetermined vibration to the plurality of portions is set.
When vibration is applied to the plurality of portions, vibration having the same amplitude and frequency may be applied to these portions, or vibration having at least different amplitude or frequency may be applied to these portions.

(Sensitivity analysis process)

The sensitivity analysis process S1b is a process of performing the sensitivity analysis under the sensitivity analysis condition set in the sensitivity analysis condition setting process S1a to obtain the sensitivity of each automotive part with respect to the vibration characteristics of the body-in-white structure 100. In the first embodiment, the sensitivity analysis process S1b is executed by the sensitivity analysis unit 13b of the automotive body design device 1.
The sheet thickness optimization analysis of each automotive part may be applied to the sensitivity analysis in the sensitivity analysis process S1b. In this case, as the sensitivity of each automotive part, the sheet thickness change rate (= $(t - t_0) \times 100/t_0$ [%]), which is the change rate of the optimum sheet thickness t based on the original sheet thickness $t_0$, may be calculated. However, for example, a difference between the optimum sheet thickness t and the original sheet thickness $t_0$ (= $t - t_0$) or a ratio between the optimum sheet thickness t and the original sheet thickness $t_0$ (= $t/t_0$) may be calculated as the sensitivity.
The sensitivity analysis in the sensitivity analysis process S1b may be either the sheet thickness optimization analysis for obtaining the optimum sheet thickness of the entire automotive part or the sheet thickness optimization analysis for obtaining the optimum sheet thickness for each shell element used for modeling the automotive part.

(Sheet-like part bonding target automotive part selection process)

The sheet-like part bonding target automotive part selection process S1c is a process of selecting the automotive part to which the sheet-like part will be bonded and joined based on the sensitivity obtained for each automotive part in the sensitivity analysis process S1b. In the first embodiment, the sheet-like part bonding target automotive part selection process S1c is executed by the sheet-like part bonding target automotive part selection unit 13c of the automotive body design device 1.

When the sheet thickness optimization analysis for obtaining the sensitivity for each automotive part is performed in the sensitivity analysis process S1b, the automotive part having the sensitivity larger than the predetermined value set in advance is selected in the sheet-like part bonding target automotive part selection process S1c. On the other hand, when the sheet thickness optimization analysis for obtaining the sensitivity of each shell element of the automotive part is performed in the sensitivity analysis process S1b, a ratio of shell elements having the sensitivity equal to or higher than the predetermined value among the shell elements included in each automotive part is calculated first. Then, the automotive part having a large calculated ratio of shell elements may be selected.

<<Sheet-like part optimization analysis step>>

The sheet-like part optimization analysis step S3 is a step of performing the optimization analysis on the shape of the sheet-like part bonded and joined to the automotive part selected in the automotive part selection step S1. As illustrated in FIG. 7, the sheet-like part optimization analysis step S3 includes a design space setting process S3a, a sheet-like part model generation process S3b, a connecting process S3c, a material property setting process S3d, an optimization analysis condition setting process S3e, and an optimization analysis process S3f. In the first embodiment, the sheet-like part optimization analysis step S3 is executed by the sheet-like part optimization analysis unit 15 of the automotive body design device 1.

(Design space setting process)

The design space setting process S3a is a process of setting the two-dimensional space along the surface of the automotive part selected in the automotive part selection step S1 as a design space to be subjected to the optimization analysis. In the first embodiment, the design space setting process S3a is executed by the design space setting unit 15a of the automotive body design device 1.

(Sheet-like part model generation process)

The sheet-like part model generation process S3b is a process of generating, in the design space set in the design space setting process S3a, the sheet-like part model that is modeled by shell elements for optimization analysis processing. In the first embodiment, the sheet-like part model generation process S3b is executed by the sheet-like part model generation unit 15b of the automotive body design device 1.

(Connecting process)

The connecting process S3c is a process of connecting the sheet-like part model generated in the sheet-like part model generation process S3b to the automotive part selected in the automotive part selection step S1. In the first embodiment, the connecting process S3c is executed by the connecting unit 15c of the automotive body design device 1.
In the connecting process S3c, connection of the sheet-like part model and the automotive part is connection (rigid joint or elastic joint) of, for example, a node of the sheet-like part model and a node of the automotive part (rigid body element) with an element (rigid body element), an elastic body element, or an elastic-plastic body element.

(Material property setting process)

The material property setting process S3d is a process of setting the material property in the sheet-like part model. In the first embodiment, the material property setting process S3d is executed by the material property setting unit 15d of the automotive body design device 1. The material property set in the material property setting process S3d may be set according to the type of material (steel sheet or the like) of the sheet-like part to be bonded and joined to the actual automotive part. Further, the sheet thickness set in the sheet-like part model may be the sheet thickness of a material to be actually applied. A value of the sheet thickness is not particularly limited, but is preferably in a range that can be regarded as a sheet material (about 0.5 mm to 10 mm). The setting of the material property to the sheet-like part model in the material property setting process S3d may be either before or after the sheet-like part model is connected to the automotive part in the connecting process S3c.

(Optimization analysis condition setting process)

The optimization analysis condition setting process S3e is a process of setting the objectives and the vibration input condition set as the sensitivity analysis condition in the sensitivity analysis condition setting process S1a and the constraint condition regarding the weight of the body-in-white structure as the optimization analysis condition. In the first embodiment, the optimization analysis condition setting process S3e is executed by the optimization analysis condition setting unit 15e of the automotive body design device 1.

In the optimization analysis condition setting process S3e, it is possible to set objectives that minimize the frequency response value of any one of acceleration, inertance, and equivalent emission power in the predetermined frequency band in the predetermined portion of the body-in-white structure 100. Furthermore, in the optimization analysis condition setting process S3e, the vibration input condition for inputting predetermined vibration to one or two or more portions of the body-in-white structure 100 can be set.

The objectives and the vibration input condition set as the optimization analysis condition are the same as the objectives and the vibration input condition set in the sensitivity analysis condition setting process. On the other hand, the constraint condition regarding the weight of the body-in-white structure 100 set as the optimization analysis condition may be the same as the constraint condition regarding the weight of the body-in-white structure 100 set as one of the constraint conditions in the sensitivity analysis condition setting process. In addition, the constraint condition regarding the weight of the body-in-white structure 100 is a constraint that a weight increase caused by bonding the sheet-like part is a predetermined value or less. Therefore, the constraint condition regarding the weight of the body-in-white structure 100 is synonymous with the constraint condition regarding the weight of the sheet-like part model.

(Optimization analysis process)

The optimization analysis process S3f is a process of performing the optimization analysis for obtaining the optimized shape of the sheet-like part model under the optimization analysis condition set in the optimization analysis condition setting process S3e. In the first embodiment, the optimization analysis process S3f is executed by the optimization analysis unit 15f of the automotive body design device 1.

For example, topology optimization can be applied to the optimization analysis in the optimization analysis process S3f. In the topology optimization using densimetry, optimization analysis processing is performed with a density of the shell element of the sheet-like part model as a design variable. Then, the optimized shape of the sheet-like part model is obtained by leaving and erasing the shell element. Furthermore, the optimum position of the sheet-like part model can be obtained from the position of the shell element of the sheet-like part model remaining in the optimization analysis processing.

When the intermediate density is large in topology optimization using the densimetry, it is preferable to discretize by giving the penalty coefficient as the optimization parameter. In this case, a penalty coefficient value can be appropriately set.

The optimization analysis process S3f is not limited to the one that performs the topology optimization as described above, and may be an optimization analysis by another calculation method. In the optimization analysis process S3f, for example, analysis software using a commercially available finite element method can also be used.

<Automotive body design program>

The above description of the first embodiment relates to a load transfer structure optimization analysis device and method. However, the first embodiment may be configured as an automotive body design program that causes each unit in the arithmetic processing unit 11 of the automotive body design device 1 (FIG. 1) configured by the computer to function.

The automotive body design program according to the first embodiment designs the automotive body in which the vibration-damping properties of the body-in-white structure are improved by bonding and joining the sheet-like part to the surface of the automotive part configuring the body-in-white structure of the automotive body. The automotive body design program according to the first embodiment causes the computer to function as the automotive part selection unit 13 and the sheet-like part optimization analysis unit 15 as in the arithmetic processing unit 11 illustrated in FIG. 1.

The automotive body design program according to the first embodiment causes each unit included in the automotive part selection unit 13 to function in order to cause the computer to function as the automotive part selection unit 13. As illustrated in FIG. 1 described above, the automotive part selection unit 13 includes the sensitivity analysis condition setting unit 13a, the sensitivity analysis unit 13b, and the sheet-like part bonding target automotive part selection unit 13c.

Furthermore, the automotive body design program according to the first embodiment causes each unit included in the sheet-like part optimization analysis unit 15 to function in order to cause the computer to function as the sheet-like part optimization analysis unit 15. As illustrated in FIG. 1 described above, the sheet-like part optimization analysis unit 15 includes the design space setting unit 15a, the sheet-like part model generation unit 15b, the connecting unit 15c, the material property setting unit 15d, the optimization analysis condition setting unit 15e, and the optimization analysis unit 15f.

As described above, according to the automotive body design device, method, and program in the first embodiment, it is possible to design the automotive body in which the vibration-damping properties of the body-in-white structure is improved by appropriately selecting the automotive part to which the sheet-like part is bonded and joined, and obtaining the optimized shape of the sheet-like part. Furthermore, according to the first embodiment, by setting the two-dimensional space along the surface of the selected automotive part as the design space and obtaining the optimized shape of the sheet-like part model modeled by the shell element, it is possible to obtain the shape that can be easily manufactured by press forming or the like as an actual sheet-like part. The effect of improving the vibration-damping properties by the automotive body design device, method, and program according to the first embodiment will be verified in Examples described later.

The automotive body design device, method, and program according to the first embodiment improve the vibration-damping properties of the body-in-white structure of the automotive body by bonding and joining the sheet-like part to the automotive part to change mass distribution of the automotive part. However, the vibration characteristics related to the vibration-damping properties of the automotive body also affect stiffness in addition to the mass distribution of the automotive part. Therefore, when the topology optimization is applied as the optimization analysis for obtaining the optimized shape of the sheet-like part model, it is conceivable to directly give Young's modulus of a material (e.g., steel sheet) used for an actual sheet-like part as the material property of the sheet-like part model modeled by the shell element.

In addition, the shape of the sheet-like part model remaining by the topology optimization is easily affected by the stiffness of the automotive part. In other words, it has been found that when the topology optimization is performed by connecting the sheet-like part model to the automotive part, the sheet-like part model tends to remain in porous in a portion where the effect of improving stiffness is easily obtained, such as a ridge line portion in the automotive part. It is considered that the optimized shape of the sheet-like part model remaining in porous is a shape of the sheet-like part difficult to actually manufacture.

When the above optimized shape of the sheet-like part model is obtained, it is preferable that the material property other than the Young's modulus of the material to be actually used is set as it is as the material property set in the sheet-like part model, and the Young's modulus is set to a minimum value. As a result, the influence on the stiffness caused by the sheet-like part model is eliminated, and the optimized shape collectively remaining mainly in a planar portion of the automotive part is obtained. Thus, the shape of the sheet-like part easy to manufacture is obtained.

[Second embodiment]

In the automotive body design method according to the first embodiment described above, a sheet-like part is bonded and joined to a surface of an automotive part configuring a body-in-white structure of an automotive body, so as to design the automotive body with improved vibration-damping properties of the body-in-white structure.

However, the present invention can be configured as an automotive body manufacturing method in which vibration-damping properties of the body-in-white structure is improved by bonding and joining the sheet-like part to the surface of the automotive part configuring the body-in-white structure of the automotive body.

In other words, in the automotive body manufacturing method according to the second embodiment, an optimized shape of a sheet-like part model to be bonded and joined to the automotive part selected in the body-in-white structure is obtained first using the automotive body design method according to the first embodiment described above. Next, a shape of the sheet-like part to be bonded and joined to the automotive part selected and a position to bond and join are determined based on the obtained optimized shape of the sheet-like part model. Subsequently, the sheet-like part is manufactured based on the determined shape of the sheet-like part. Then, using the determined position of the sheet-like part, the manufactured sheet-like part is bonded and joined to the automotive part selected in the body-in-white structure.

As an example, the automotive body manufacturing method according to the second embodiment will be described for a case where the optimized shapes 121, 123, and 125 illustrated in FIG. 6 are obtained as the optimized shapes of the sheet-like part model using the automotive body design method according to the first embodiment described above.

In the automotive body design method according to the first embodiment, the roof center reinforcement 103, the roof rail 117, and the wheel house 119 are selected as automotive parts to which the sheet-like part will be bonded and joined. Therefore, first, the shape of each sheet-like part to be bonded and joined to each of the roof center reinforcement 103, the roof rail 117, and the wheel house 119 and the position to bond and join are determined based on the optimized shapes 121, 123, and 125 of the sheet-like part model.

The optimized shapes 121, 123, and 125 of the sheet-like part model are obtained by leaving and erasing shell elements in the topology optimization of the shell element in the optimization analysis process S3f of the automotive body design method according to the first embodiment. Therefore, the position to bond and join the sheet-like part can be determined from the position of the sheet-like part model remaining in the optimization analysis.

Next, each sheet-like part is designed and manufactured according to the shape of each sheet-like part determined based on the optimized shapes 121, 123, and 125. A sheet thickness and a material type of the sheet-like part are the sheet thickness and the material type set for each sheet-like part model in the material property setting process S3d. Since the sheet-like part is manufactured by press working, the sheet-like part is designed into a shape that can be manufactured by press working based on shapes of the optimized shapes 121, 123, and 125 of the sheet-like part model. For example, in consideration of blank workability of the sheet-like part, unevenness of a contour is smoothed while maintaining the weight of the sheet-like part model. In addition, in a case where the sheet-like part model is scattered in a certain range region, the sheet-like part model is replaced with one sheet-like part having the same weight and center of gravity position.

Subsequently, the sheet-like part manufactured is attached to each of the roof center reinforcement 103, the roof rail 117, and the wheel house 119, which are the selected automotive parts, using the position of each of the sheet-like parts determined based on the optimized shapes 121, 123, and 125. The sheet-like part may be bonded and joined to the automotive part by welding such as resistance spot welding, electric arc welding, or laser beam welding, by bonding using a structural adhesive, or by weldbonding in which spot welding and bonding are combined.

Examples of a mode of bonding and joining the sheet-like part include the following. First, position data of three-dimensional coordinates in the body-in-white structure 100 is obtained as a position of the sheet-like part to be bonded and joined to each automotive part selected. Next, the obtained position data of the three-dimensional coordinates is converted into assembly data. The assembly data is data in a format used by an assembly robot (numerical control data) in a manufacturing process of the automotive body, and the converted assembly data is read by a numerical control unit. Then, using the numerical control unit that has read the converted assembly data, component assembly for bonding and joining the sheet-like part to each automotive part selected in the body-in-white structure 100 is performed.

In addition, the automotive body manufacturing method according to the present invention may be a method for performing modification for improving the vibration-damping properties of the body-in-white structure of an already manufactured automotive body. In this case, first, positions of the obtained optimized shapes 121, 123, and 125 of the sheet-like part model are displayed on a display device. Then, the sheet-like part may be bonded and joined to a position on the automotive body (roof center reinforcement 103, roof rail 117, and wheel house 119) corresponding to the positions of the optimized shapes 121, 123, and 125 in the displayed sheet-like part model by a spot welding gun or the like.

As described above, according to the automotive body manufacturing method according to the second embodiment, it is possible to manufacture the automotive body in which the vibration-damping properties of the body-in-white structure is improved while maintaining the automotive body performance, such as the stiffness, other than the vibration-damping properties.

[Examples]

Analysis described below has been performed to verify effects of the automotive body design method, device, and program according to the present invention.

In the analysis, first in Step A, as in the first embodiment described above, the body-in-white structure 100 of the automotive body illustrated in FIG. 2 was set as an analysis target, and the sensitivity analysis for obtaining the sensitivity of each automotive part with respect to the vibration characteristics related to the vibration-damping properties was performed. Further, an automotive part to bond and join the sheet-like part was selected based on the sensitivity obtained by the sensitivity analysis.

Next, as Step B, the optimization analysis for obtaining the optimized shape of the sheet-like part to be bonded and joined to the automotive part selected in Step A was performed.

Furthermore, as Step C, the vibration characteristics of the body-in-white structure in which the sheet-like part model having the optimized shape obtained in Step B was bonded and joined to the automotive part selected in Step A were obtained as an invention example. Then, the vibration characteristics of the original body-in-white structure without the sheet-like part model having the optimized shape were obtained as a comparative example, and the vibration-damping properties of the body-in-white structure according to the invention example was evaluated.

In the analysis in Tables 1 and 2, the sensitivity analysis, selection of the automotive part, and the optimization analysis of the sheet-like part were performed on Examples 1 to 6 whose sensitivity analysis condition, sensitivity analysis method, and a material of the sheet-like part were changed. An effect of improving the vibration-damping properties was compared and examined.

Table 1

| | Portion to which vibration is applied | | Evaluating portion of vibration characteristics | | | Evaluation item of vibration characteristics | Frequency band for evaluating vibration characteristics |
|---|---|---|---|---|---|---|---|
| | Front sub-frame | Suspension tower | Floor cross member | Roof center reinforcement | Roof panel | | |
| Example 1 | ○ | | ○ | | | Inertance | 115 Hz-135 Hz |
| Example 2 | ○ | | | ○ | | Inertance | 95 Hz-115 Hz |
| Example 3 | ○ | | | | ○ | ERP | 110 Hz-130 Hz |
| Example 4 | ○ | ○ | | ○ | | Inertance | 95 Hz-115 Hz |
| Example 5 | ○ | | | ○ | | Inertance | 95 Hz-115 Hz |
| Example 6 | ○ | | | ○ | | Inertance | 95 Hz-115 Hz |

Table 2

| | Step A: Sensitivity analysis | | Step B: Optimization analysis | |
|---|---|---|---|---|
| | Sensitivity analysis method | | Material property of sheet-like part model | |
| | Sheet thickness optimization for each automotive part | Sheet thickness optimization for each element | Steel sheet | Lead sheet |
| Example 1 | ○ | | ○ | |
| Example 2 | ○ | | ○ | |
| Example 3 | ○ | | ○ | |
| Example 4 | ○ | | ○ | |
| Example 5 | | ○ | ○ | |
| Example 6 | ○ | | | ○ |

First, for each of Examples 1 to 6, an automotive part to bond and join the sheet-like part was selected as Step A, and the optimized shape of the sheet-like part model was obtained as Step B.

In Example 1, as the sensitivity analysis condition, the objectives that minimize the inertance of the floor cross member 105 in a frequency band of 115 Hz to 135 Hz and the constraint condition that the weight increase of the body-in-white structure 100 is 5 kg or less and the sheet thickness is equal to or more the original automotive part were set. Note that the above-described Formula (1) was used for calculation of the inertance.

In addition, as the vibration input condition in the sensitivity analysis and the optimization analysis, the front sub-frame 113 was used as a portion to which vibration is applied. In the sensitivity analysis of Example 1, the sheet thickness optimization analysis for each automotive part was performed, and the sheet thickness change rate for each automotive part was obtained as the sensitivity. Further, in the optimization analysis of the sheet-like part model of Example 1, the material property of a steel sheet indicated in Table 3 was set in the sheet-like part model.

Table 3

| | Sheet thickness [mm] | Density [kg/cm$^3$] | Young's modulus [GPa] |
|---|---|---|---|
| Steel sheet | 2.0 | 7.85 | 210 |
| Lead sheet | 3.0 | 11.34 | 16.1 |

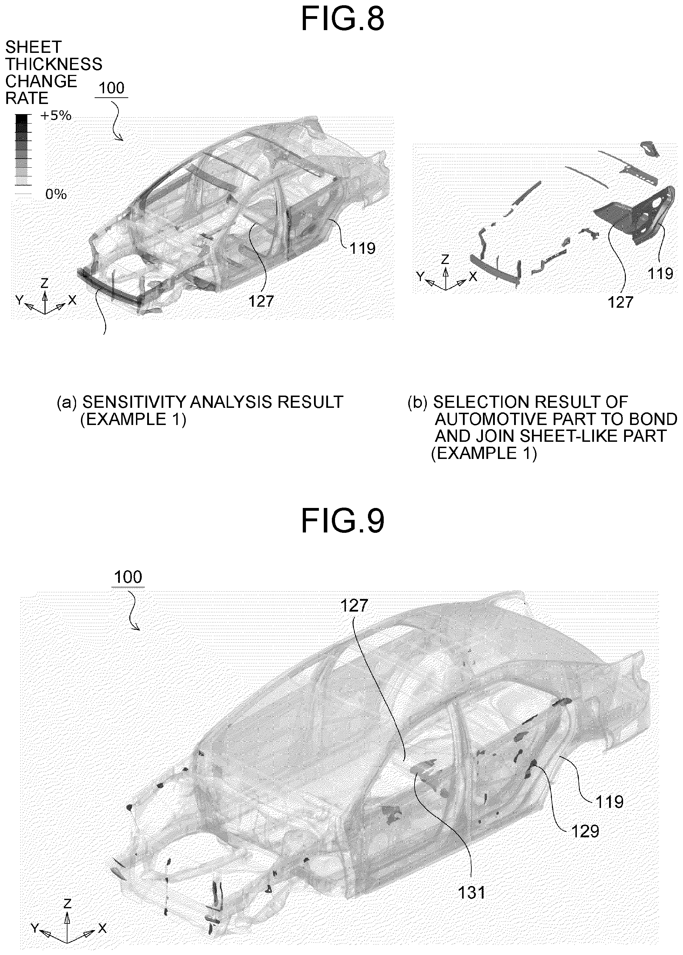

FIG. 8 illustrates a contour diagram of the sheet thickness change rate for each automotive part obtained by the sensitivity analysis and an automotive part selected as a target to bond and join the sheet-like part based on the sheet thickness change rate in Example 1. In Example 1, as illustrated in FIG. 8, since the sheet thickness change rate of the wheel house 119, a fuel tank 127, and the like was as large as 8% or more, these portions were selected as automotive parts to bond and join the sheet-like part.

FIG. 9 illustrates the optimized shape of the sheet-like part model obtained in Example 1. In FIG. 9, portions indicated with dark gray are optimized shapes of the sheet-like part model. As illustrated in FIG. 9, an optimized shape 129 of the sheet-like part model to be bonded and joined to the wheel house 119, an optimized shape 131 of the sheet-like part model to be bonded and joined to the fuel tank 127, and the like were obtained.

In Example 2, similarly to the first embodiment described above, as the vibration input condition, the front sub-frame 113 was set as a portion to which vibration is applied, and minimization of the inertance in a frequency band of 95 Hz to 115 Hz at the center of the roof center reinforcement 103 was set as the objectives. For calculation of the inertance, Formula (1) described above was used.

In Example 2, in the sensitivity analysis, the sheet thickness optimization analysis for each automotive part was performed, and the sheet thickness change rate for each automotive part was obtained as the sensitivity. Further, in Example 2, in the optimization analysis of the sheet-like part model, the material property of the steel sheet indicated in Table 3 described above was set in the sheet-like part model.

FIG. 5 described above illustrates the contour diagram of the sheet thickness change rate for each automotive part obtained by the sensitivity analysis and an automotive part selected as a target to bond and join the sheet-like part based on the sheet thickness change rate in Example 2. In Example 2, the sheet thickness change rates of the roof center reinforcement 103, the roof rail 117, the wheel house 119, and the like were as large as 5% or more, and thus these parts were selected as automotive parts to bond and join the sheet-like part.

FIG. 6 described above illustrates a result of obtaining the optimized shape of the sheet-like part model to be bonded and joined to the automotive part selected based on a result of sensitivity analysis in Example 2. In FIG. 6, portions indicated with dark gray are optimized shapes of the sheet-like part model. As illustrated in FIG. 6, the optimized shape 121 of the sheet-like part to be bonded and joined to the roof center reinforcement 103, the optimized shape 123 of the sheet-like part model to be bonded and joined to the roof rail 117, the optimized shape 125 of the sheet-like part model to be bonded and joined to the wheel house 119, and the like were obtained.

In Example 3, as the vibration input condition, the front sub-frame 113 was set as a portion to which vibration is applied, and minimization of equivalent emission power (ERP) in a frequency band of 110 Hz to 130 Hz of the roof panel 109 was set as the objectives. Formula (2) described above was used to calculate the equivalent emission power ERP.

In Example 3, in the sensitivity analysis, the sheet thickness optimization analysis for each automotive part was performed, and the sheet thickness change rate for each automotive part was obtained as the sensitivity. Further, in Example 3, in the optimization analysis of the sheet-like part model, the material property of the steel sheet indicated in Table 3 described above was set in the sheet-like part model.

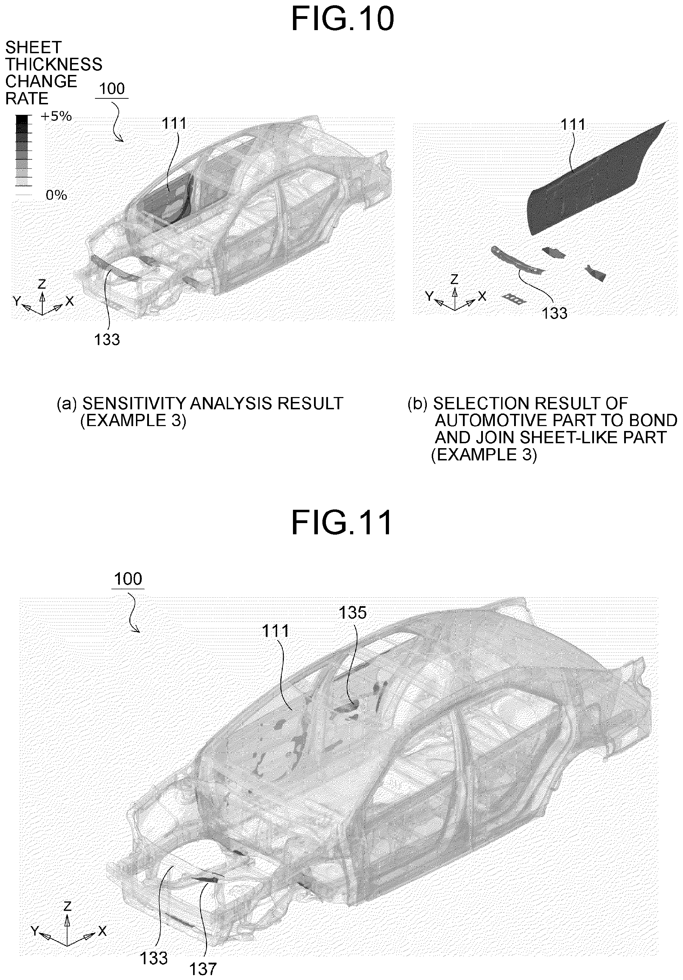

FIG. 10 is a contour diagram of the sheet thickness change rate for each automotive part obtained by the sensitivity analysis in Example 3, and illustrates the automotive part selected as a target to bond and join the sheet-like part based on the sheet thickness change rate. In Example 3, since the sheet thickness change rate of the door panel 111, a radiator support 133, and the like was as large as 5% or more, these parts were selected as automotive parts to bond and join the sheet-like part.

FIG. 11 illustrates a result of obtaining the optimized shape of the sheet-like part model to be bonded and joined to the automotive part selected based on a result of sensitivity analysis in Example 3. In FIG. 11, portions indicated with dark gray are optimized shapes of the sheet-like part model. As illustrated in FIG. 11, an optimized shape 135 of the sheet-like part model to be bonded and joined to the door panel 111 and an optimized shape 135 of the sheet-like part model to be bonded and joined to the radiator support 133 were obtained.

In Example 4, as the vibration input condition, the front sub-frame 113 and the suspension tower 115 were used as portions to which vibration is applied, and minimization of the inertance in a frequency band of 95 Hz to 115 Hz at the center of the roof center reinforcement 103 was set as the objectives. For calculation of the inertance, Formula (1) described above was used.

In Example 4, in the sensitivity analysis, the sheet thickness optimization analysis for each automotive part was performed, and the sheet thickness change rate for each automotive part was obtained as the sensitivity. Further, in Example 4, the material property of the steel sheet indicated in Table 3 described above was set in the sheet-like part model in the optimization analysis of the sheet-like part model.

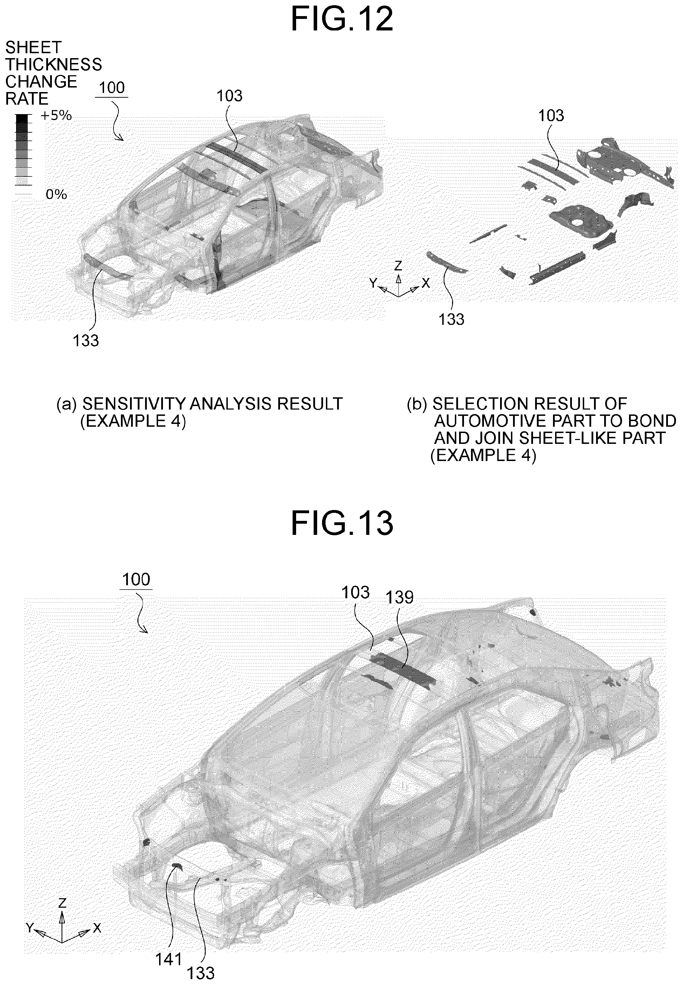

FIG. 12 is a contour diagram of the sheet thickness change rate for each automotive part obtained by the sensitivity analysis in Example 4, and illustrates the automotive part selected as a target to bond and join the sheet-like part. In Example 4, the sheet thickness change rate of the roof center reinforcement 103, the radiator support 133, and the like was as large as 8% or more, and thus these parts were selected as automotive parts to bond and join the sheet-like part.

FIG. 13 illustrates a result of obtaining the optimized shape of the sheet-like part model to be bonded and joined to the automotive part selected based on a result of sensitivity analysis in Example 4. In FIG. 13, portions indicated with dark gray are optimized shapes of the sheet-like part model. As illustrated in FIG. 13, an optimized shape 139 of the sheet-like part model to be bonded and joined to the roof center reinforcement 103 and an optimized shape 141 of the sheet-like part model to be bonded and joined to the radiator support 133 were obtained.

In Example 5, as the vibration input condition, the front sub-frame 113 was set as a portion to which vibration is applied, and minimization of the inertance in a frequency band of 95 Hz to 115 Hz at the center of the roof center reinforcement 103 was set as the objectives. For calculation of the inertance, Formula (1) described above was used.

In addition, in Example 5, in the sensitivity analysis, the sheet thickness optimization analysis for each element of the automotive part was performed, and the sheet thickness change rate for each element of the automotive part was obtained as the sensitivity. Further, in Example 5, the material property of the steel sheet indicated in Table 3 described above was set in the sheet-like part model in the optimization analysis of the sheet-like part model.

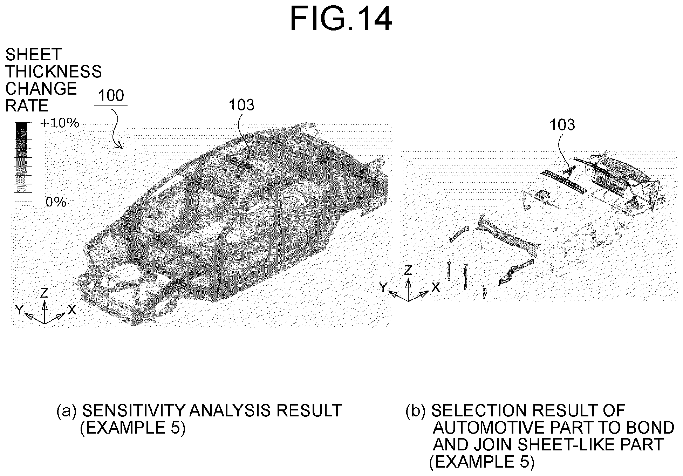

FIG. 14 is a contour diagram of the sheet thickness change rate for each automotive part obtained by the sensitivity analysis in Example 5, and illustrates the automotive part selected as a target to bond and join the sheet-like part based on the sheet thickness change rate. In Example 5, since the sheet thickness change rate of the roof center reinforcement 103 and the like was as large as 8% or more, these parts were selected as automotive parts to bond and join the sheet-like part.

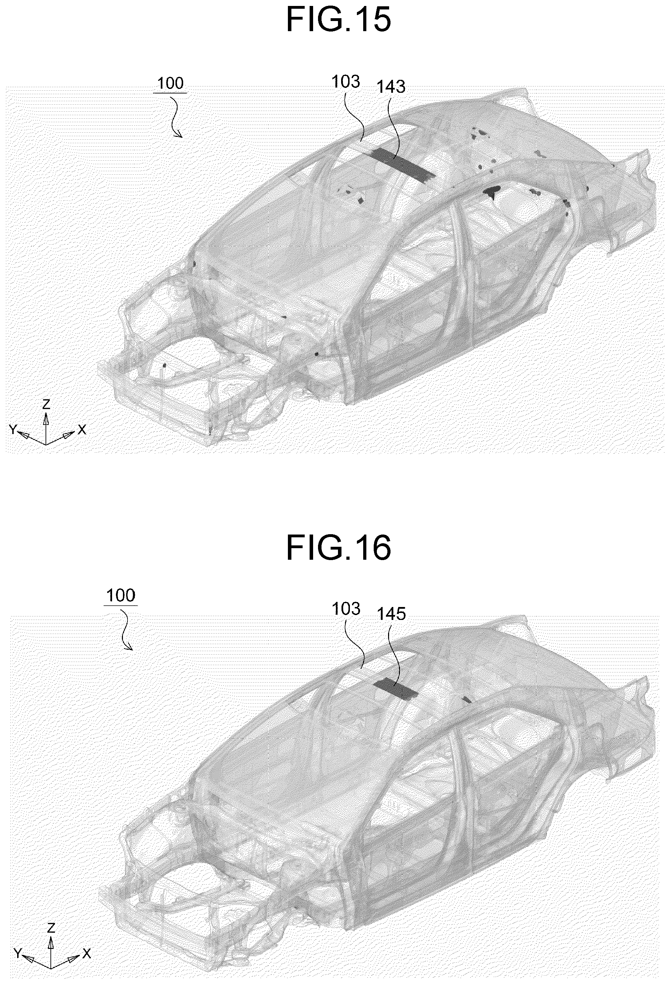

FIG. 15 illustrates a result of obtaining the optimized shape of the sheet-like part model to be bonded and joined to the automotive part selected based on a result of sensitivity analysis in Example 5. In FIG. 15, a portion indicated with dark gray is the optimized shape of the sheet-like part model. From the result illustrated in FIG. 15, an optimized shape 143 of the sheet-like part model to be bonded and joined to the roof center reinforcement 103 was obtained.

In Example 6, as the vibration input condition, the front sub-frame 113 was set as a portion to which vibration is applied, and minimization of the inertance in a frequency band of 95 Hz to 115 Hz at the center of the roof center reinforcement 103 was set as the objectives. For calculation of the inertance, Formula (1) described above was used. Further, in Example 6, in the sensitivity analysis, the sheet thickness optimization analysis for each automotive part was performed, and the sheet thickness change rate for each automotive part was obtained as the sensitivity. Further, in Example 6, in the optimization analysis of the sheet-like part model, the material property of a lead sheet indicated in Table 3 described above was set in the sheet-like part model.

FIG. 5 described above illustrates the contour diagram of the sheet thickness change rate for each automotive part obtained by the sensitivity analysis in Example 6, and the automotive part selected as a target to bond and join the sheet-like part based on the sheet thickness change rate. Since the sensitivity analysis condition in Example 6 is the same as that in Example 2, the roof center reinforcement 103, the roof rail 117, the wheel house 119, and the like were selected as the automotive parts to bond and join the sheet-like part.

FIG. 16 illustrates a result of obtaining the optimized shape of the sheet-like part model to be bonded and joined to the automotive part selected based on a result of sensitivity analysis in Example 6. In FIG. 16, portions indicated with dark gray are optimized shapes of the sheet-like part model. As illustrated in FIG. 16, the optimized shape 121 of the sheet-like part model to be bonded and joined to the roof center reinforcement 103, the optimized shape 123 of the sheet-like part model to be bonded and joined to the roof rail 117, and the optimized shape 125 of the sheet-like part model to be bonded and joined to the wheel house 119 were obtained.

Subsequently, as Step C, an evaluation value of the vibration characteristics of the body-in-white structure 100 in which the sheet-like part model having the optimized shape obtained in Example 1 to Example 6 was attached to each automotive part was calculated. Furthermore, an evaluation value of the vibration characteristics was similarly calculated for the original body-in-white structure 100 before the sheet-like part model was bonded and joined. Then, improvement of the vibration-damping properties of the body-in-white structure by bonding and joining the sheet-like part model having the optimized shape was examined.

In the evaluation on the vibration-damping properties, a reduction rate of the evaluation value of the vibration characteristics of the body-in-white structure to which the sheet-like part having the optimized shape was bonded and joined was calculated based on the vibration characteristic value of the original body-in-white structure.

The evaluation value of the vibration characteristics in each of Examples 1 to 6 was the same as the vibration characteristics set as the objectives of the sensitivity analysis condition described above. Furthermore, in the calculation of the vibration characteristic evaluation value, the vibration input condition given to the body-in-white structure 100 was the same as the vibration input condition given as the sensitivity analysis condition of each of Examples 1 to 6.

Table 4 indicates the vibration characteristic evaluation values of the body-in-white structure to which the sheet-like part having the optimized shape obtained in Examples 1 to 6 was bonded and joined (invention examples), the evaluation values of the vibration characteristics of the original body-in-white structure (comparative examples), and the reduction rates of the evaluation values of the vibration characteristics.

**Table 4**

| | Vibration characteristics of body-in-white structure | | | |
| | Evaluating portion of vibration characteristics, frequency band for evaluation | Evaluation value of vibration characteristics | | Reduction rate |
| | | Comparative example | Invention example | |
| Example 1 | Floor cross member (inertance) 115 Hz-135 Hz | 48.7 mm/s$^2$/N | 27.8 mm/s$^2$/N | 43% |
| Example 2 | Roof center reinforcement (inertance) 95 Hz-115 Hz | 123 mm/s$^2$/N | 33.3 mm/s$^2$/N | 73% |
| Example 3 | Roof panel (ERP) 110 Hz-130Hz | 18.2 mJ/s | 9.7 mJ/s | 47% |
| Example 4 | Roof center reinforcement (inertance) 95 Hz-115 Hz | 94.8 mm/s$^2$/N | 15.0 mm/s$^2$/N | 84% |
| Example 5 | Roof center reinforcement (inertance) 95 Hz-115 Hz | 123 mm/s$^2$/N | 40.8 mm/s$^2$/N | 67% |
| Example 6 | Roof center reinforcement (inertance) 95 Hz-115 Hz | 123 mm/s$^2$/N | 12.6 mm/s$^2$/N | 90% |

In any of Examples 1 to 6, it can be seen that the evaluation value of the vibration characteristics is significantly reduced (43% to 90%) by bonding and joining the sheet-like part having the optimized shape to the automotive part. Accordingly, it is apparent that the automotive body design method according to the present invention is capable of designing an automotive body with improved vibration-damping properties of the body-in-white structure.

Industrial Applicability

According to the present invention, it is possible to provide an automotive body design method, device, and program for designing an automotive body with improved vibration-damping properties of a body-in-white structure while maintaining automotive body performance, such as stiffness, other than the vibration-damping properties. Furthermore, according to the present invention, it is possible to provide an automotive body manufacturing method for manufacturing the automotive body with improved vibration-damping properties of the body-in-white structure while maintaining automotive body performance, such as stiffness, other than the vibration-damping properties.

Reference Signs List

1    AUTOMOTIVE BODY DESIGN DEVICE

3    DISPLAY DEVICE

5    INPUT DEVICE

7    STORAGE DEVICE

9    WORKING DATA MEMORY

11    ARITHMETIC PROCESSING UNIT

13    AUTOMOTIVE PART SELECTION UNIT

13a    SENSITIVITY ANALYSIS CONDITION SETTING UNIT

13b    SENSITIVITY ANALYSIS UNIT

13c    SHEET-LIKE PART BONDING TARGET AUTOMOTIVE PART SELECTION UNIT

15    SHEET-LIKE PART OPTIMIZATION ANALYSIS UNIT

15a    DESIGN SPACE SETTING UNIT

15b    SHEET-LIKE PART MODEL GENERATION UNIT

15c    CONNECTING UNIT

15d    MATERIAL PROPERTY SETTING UNIT

15e    OPTIMIZATION ANALYSIS CONDITION SETTING UNIT

15f    OPTIMIZATION ANALYSIS UNIT

21     BODY-IN-WHITE STRUCTURE MODEL FILE

100    BODY-IN-WHITE STRUCTURE

101    CENTER PILLAR

103    ROOF CENTER REINFORCEMENT

105    FLOOR CROSS MEMBER

107    REAR SIDE SILL

109    ROOF PANEL

111    DOOR PANEL

113    FRONT SUB-FRAME

115    SUSPENSION TOWER

117    ROOF RAIL

119    WHEEL HOUSE

121    OPTIMIZED SHAPE

123    OPTIMIZED SHAPE

125    OPTIMIZED SHAPE

127    FUEL TANK

129    OPTIMIZED SHAPE

131    OPTIMIZED SHAPE

133    RADIATOR SUPPORT

135    OPTIMIZED SHAPE

137    OPTIMIZED SHAPE

139    OPTIMIZED SHAPE

141    OPTIMIZED SHAPE

143    OPTIMIZED SHAPE

145    OPTIMIZED SHAPE

**Claims**

1. An automotive body design method for designing an automotive body in which vibration-damping properties of a body-in-white structure of the automotive body is improved by bonding and joining a sheet-like part to a surface of an automotive part configuring the body-in-white structure, the automotive body design method being executed by a computer and comprising:

an automotive part selection step of performing sensitivity analysis of the automotive part with respect to vibration characteristics used for evaluation of the vibration-damping properties of the body-in-white structure, and selecting an automotive part to bond and join the sheet-like part; and

a sheet-like part optimization analysis step of performing optimization analysis on a shape of the sheet-like part to be bonded and joined to the automotive part selected, wherein

the automotive part selection step includes

a sensitivity analysis condition setting process of setting, as a sensitivity analysis condition, objectives related to the vibration characteristics of the body-in-white structure, a constraint condition related to a weight of the body-in-white structure and a sheet thickness of the automotive part, and a vibration input condition related to vibration applied to the body-in-white structure,

a sensitivity analysis process of performing the sensitivity analysis under the sensitivity analysis condition set and obtaining sensitivity of the automotive part with respect to the vibration characteristics of the body-in-white structure, and

a sheet-like part bonding target automotive part selection process of selecting the automotive part to bond and join the sheet-like part based on the sensitivity obtained for the automotive part, and

the sheet-like part optimization analysis step includes

a design space setting process of setting a two-dimensional space along a surface of the automotive part selected in the automotive part selection step as a design space to be subjected to the optimization analysis,

a sheet-like part model generation process of generating, in the design space set, a sheet-like part model that is modeled by a shell element to perform an optimization analysis process,

a connecting process of connecting the sheet-like part model generated and the automotive part selected in the automotive part selection step,

an optimization analysis condition setting process of setting, as an optimization analysis condition for performing the optimization analysis, the objectives and the vibration input condition set as the sensitivity analysis condition and the constraint condition regarding the weight of the body-in-white structure, and

an optimization analysis process of performing the optimization analysis to obtain an optimized shape of the sheet-like part model under the optimization analysis condition set.

2. The automotive body design method according to claim 1, wherein the sensitivity analysis condition setting process includes setting of:

the objectives that minimize a frequency response value of any one of acceleration, inertance, and equivalent emission power in a predetermined frequency band;

the constraint condition that the sheet thickness of the automotive part is equal to or larger than an original sheet thickness of the automotive part; and

the vibration input condition for inputting predetermined vibration to one portion or two or more portions of the body-in-white structure.

3. An automotive body design device for designing an automotive body in which vibration-damping properties of a body-in-white structure of the automotive body is improved by bonding and joining a sheet-like part to a surface of an automotive part configuring the body-in-white structure, the automotive body design device comprising:

an automotive part selection unit configured to perform sensitivity analysis of the automotive part with respect to vibration characteristics used for evaluation of the vibration-damping properties of the body-in-white structure, and select an automotive part to bond and join the sheet-like part; and

a sheet-like part optimization analysis unit configured to perform optimization analysis on a shape of the sheet-like part to be bonded and joined to the automotive part selected, wherein the automotive part selection unit includes

a sensitivity analysis condition setting unit configured to set, as a sensitivity analysis condition, objectives related to the vibration characteristics of the body-in-white structure, a constraint condition related to a weight of the body-in-white structure and a sheet thickness of the automotive part, and a vibration input condition related to vibration applied to the body-in-white structure,
a sensitivity analysis unit configured to perform the sensitivity analysis under the sensitivity analysis condition set and obtain sensitivity of the automotive part with respect to the vibration characteristics of the body-in-white structure, and
a sheet-like part bonding target automotive part selection unit configured to select the automotive part to bond and join the sheet-like part based on the sensitivity obtained for the automotive part, and

the sheet-like part optimization analysis unit includes

a design space setting unit configured to set a two-dimensional space along a surface of the automotive part selected by the automotive part selection unit as a design space to be subjected to the optimization analysis,
a sheet-like part model generation unit configured to generate, in the design space set, a sheet-like part model that is modeled by a shell element to perform an optimization analysis process,
a connecting unit configured to connect the sheet-like part model generated and the automotive part selected by the automotive part selection unit,
an optimization analysis condition setting unit configured to set, as an optimization analysis condition for performing the optimization analysis, the objectives and the vibration input condition set as the sensitivity analysis condition and the constraint condition regarding the weight of the body-in-white structure, and
an optimization analysis unit configured to perform the optimization analysis to obtain an optimized shape of the sheet-like part model under the optimization analysis condition set.

4. An automotive body design program for designing an automotive body in which vibration-damping properties of a body-in-white structure of the automotive body is improved by bonding and joining a sheet-like part to a surface of an automotive part configuring the body-in-white structure, the automotive body design program causing a computer to function as:

an automotive part selection unit configured to perform sensitivity analysis of the automotive part with respect to vibration characteristics used for evaluation of the vibration-damping properties of the body-in-white structure, and select an automotive part to bond and join the sheet-like part; and
a sheet-like part optimization analysis unit configured to perform optimization analysis on a shape of the sheet-like part to be bonded and joined to the automotive part selected, wherein
the automotive body design program causes the automotive part selection unit to function as

a sensitivity analysis condition setting unit configured to set, as a sensitivity analysis condition, objectives related to the vibration characteristics of the body-in-white structure, a constraint condition related to a weight of the body-in-white structure and a sheet thickness of the automotive part, and a vibration input condition related to vibration applied to the body-in-white structure,
a sensitivity analysis unit configured to perform the sensitivity analysis under the sensitivity analysis condition set and obtain sensitivity of the automotive part with respect to the vibration characteristics of the body-in-white structure, and
a sheet-like part bonding target automotive part selection unit configured to select the automotive part to bond and join the sheet-like part based on the sensitivity obtained for the automotive part, and

the automotive body design program causes the sheet-like part optimization analysis unit to function as

a design space setting unit configured to set a two-dimensional space along a surface of the automotive part selected by the automotive part selection unit as a design space to be subjected to the optimization analysis,
a sheet-like part model generation unit configured to generate, in the design space set, a sheet-like part model that is modeled by a shell element to perform an optimization analysis process,
a connecting unit configured to connect the sheet-like part model generated and the automotive part selected by the automotive part selection unit,
an optimization analysis condition setting unit configured to set, as an optimization analysis condition for performing the optimization analysis, the objectives and the vibration input condition set as the sensitivity analysis condition and the constraint condition regarding the weight of the body-in-white structure, and an optimization analysis unit configured to perform the optimization analysis to obtain an optimized shape of the sheet-like part model under the optimization analysis condition set.

5. An automotive body manufacturing method for manufacturing an automotive body in which vibration-damping properties of a body-in-white structure of the automotive body is improved by bonding and joining a sheet-like part to a surface of an automotive part configuring the body-in-white structure, the automotive body manufacturing method comprising:

obtaining an optimized shape of a sheet-like part model to be bonded and joined to the automotive part selected in the body-in-white structure by using the automotive body design method according to claim 1 or 2;
determining, based on the optimized shape of the sheet-like part model obtained, a shape of the sheet-like part to be bonded and joined to the automotive part selected and a bonding and joining position;
manufacturing the sheet-like part based on the shape of the sheet-like part determined; and
bonding and joining the sheet-like part manufactured to the automotive part selected in the body-in-white structure using the position of the sheet-like part determined.

# FIG.1

**ARITHMETIC PROCESSING UNIT** ~ 11

**AUTOMOTIVE PART SELECTION UNIT** ~ 13

SENSITIVITY ANALYSIS CONDITION SETTING UNIT ~ 13a

SENSITIVITY ANALYSIS UNIT ~ 13b

SHEET-LIKE PART BONDING TARGET AUTOMOTIVE PART SELECTION UNIT ~ 13c

**SHEET-LIKE PART OPTIMIZATION ANALYSIS UNIT** ~ 15

DESIGN SPACE SETTING UNIT ~ 15a

SHEET-LIKE PART MODEL GENERATION UNIT ~ 15b

CONNECTING UNIT ~ 15c

MATERIAL PROPERTY SETTING UNIT ~ 15d

OPTIMIZATION ANALYSIS CONDITION SETTING UNIT ~ 15e

OPTIMIZATION ANALYSIS UNIT ~ 15f

1

3 — DISPLAY DEVICE

5 — INPUT DEVICE

7 — STORAGE DEVICE

21 — BODY-IN-WHITE STRUCTURE MODEL FILE

9 — WORKING DATA MEMORY

# FIG.2

# FIG.3

(a) EVALUATING PORTION OF VIBRATION CHARACTERISTICS

(b) EVALUATING PORTION OF VIBRATION CHARACTERISTICS

# FIG.4

# FIG.5

SHEET
THICKNESS
CHANGE
RATE

(a) SENSITIVITY ANALYSIS RESULT

(b) SELECTION RESULT OF
AUTOMOTIVE PART TO BOND
AND JOIN SHEET-LIKE PART

# FIG.6

# FIG.7

| AUTOMOTIVE PART SELECTION STEP | S1 |
|---|---|
| SENSITIVITY ANALYSIS CONDITION SETTING PROCESS | S1a |
| SENSITIVITY ANALYSIS PROCESS | S1b |
| SHEET-LIKE PART BONDING TARGET AUTOMOTIVE PART SELECTION PROCESS | S1c |

| SHEET-LIKE PART OPTIMIZATION ANALYSIS STEP | S3 |
|---|---|
| DESIGN SPACE SETTING PROCESS | S3a |
| SHEET-LIKE PART MODEL GENERATION PROCESS | S3b |
| CONNECTING PROCESS | S3c |
| MATERIAL PROPERTY SETTING PROCESS | S3d |
| OPTIMIZATION ANALYSIS CONDITION SETTING PROCESS | S3e |
| OPTIMIZATION ANALYSIS PROCESS | S3f |

# FIG.8

SHEET
THICKNESS
CHANGE
RATE  100

+5%

0%

119

127

119

127

(a) SENSITIVITY ANALYSIS RESULT
(EXAMPLE 1)

(b) SELECTION RESULT OF
AUTOMOTIVE PART TO BOND
AND JOIN SHEET-LIKE PART
(EXAMPLE 1)

# FIG.9

100

127

119

129

131

# FIG.10

SHEET
THICKNESS
CHANGE
RATE

100

+5%

0%

111

Z
Y X

133

111

Z
Y X

133

(a) SENSITIVITY ANALYSIS RESULT
(EXAMPLE 3)

(b) SELECTION RESULT OF
AUTOMOTIVE PART TO BOND
AND JOIN SHEET-LIKE PART
(EXAMPLE 3)

# FIG.11

100

135

111

Z
Y X

133     137

# FIG.12

SHEET
THICKNESS
CHANGE
RATE  100    103      103

+5%

0%

Z
Y X

133

133

(a) SENSITIVITY ANALYSIS RESULT
(EXAMPLE 4)

(b) SELECTION RESULT OF
AUTOMOTIVE PART TO BOND
AND JOIN SHEET-LIKE PART
(EXAMPLE 4)

# FIG.13

100          103  139

Z
Y X

141
133

# FIG.14

SHEET
THICKNESS
CHANGE
RATE

100

103

103

+10%

0%

(a) SENSITIVITY ANALYSIS RESULT
(EXAMPLE 5)

(b) SELECTION RESULT OF
AUTOMOTIVE PART TO BOND
AND JOIN SHEET-LIKE PART
(EXAMPLE 5)

# FIG.15

# FIG.16

## INTERNATIONAL SEARCH REPORT

| International application No. |
|---|
| **PCT/JP2023/014204** |

**A. CLASSIFICATION OF SUBJECT MATTER**

*G06F 30/15*(2020.01)i; *B62D 65/00*(2006.01)i; *G06F 30/23*(2020.01)i
FI:   G06F30/15; G06F30/23; B62D65/00 Q

According to International Patent Classification (IPC) or to both national classification and IPC

**B. FIELDS SEARCHED**

Minimum documentation searched (classification system followed by classification symbols)
    G06F30/15; B62D65/00; G06F30/23

Documentation searched other than minimum documentation to the extent that such documents are included in the fields searched
    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/054153 A1 (JFE STEEL CORP.) 19 March 2020 (2020-03-19) paragraphs [0083]-[0106], fig. 2 | 1-5 |
| A | JP 2019-114114 A (TOYOTA MOTOR CORP.) 11 July 2019 (2019-07-11) paragraphs [0014]-[0048], fig. 1-9 | 1-5 |
| A | JP 2019-169117 A (HONDA MOTOR CO., LTD.) 03 October 2019 (2019-10-03) paragraphs [0016]-[0056], fig. 1, 2 | 1-5 |
| A | JP 2006-350475 A (TOYOTA CENTRAL RES. & DEV. LAB., INC.) 28 December 2006 (2006-12-28) entire text, all drawings | 1-5 |
| A | CN 106326508 A (HUACHEN GROUP AUTO HOLDING CO., LTD.) 11 January 2017 (2017-01-11) entire text, all drawings | 1-5 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 April 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2023/014204**

| Patent document cited in search report | | | Publication date (day/month/year) | Patent family member(s) | | | Publication date (day/month/year) |
|---|---|---|---|---|---|---|---|
| WO | 2020/054153 | A1 | 19 March 2020 | US 2021/0279383 A1 paragraphs [0129]-[0152], fig. 2 <br> EP 3851996 A1 <br> CN 112673375 A <br> KR 10-2021-0047946 A <br> JP 2020-46185 A | | | |
| JP | 2019-114114 | A | 11 July 2019 | (Family: none) | | | |
| JP | 2019-169117 | A | 03 October 2019 | (Family: none) | | | |
| JP | 2006-350475 | A | 28 December 2006 | (Family: none) | | | |
| CN | 106326508 | A | 11 January 2017 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5585672 B
- JP 6769536 B